# EUROPEAN PATENT SPECIFICATION

(11) **EP 1 229 578 B1**
(45) Date of publication and mention of the grant of the patent: **28.12.2011**
(21) Application number: 00942465.6
(22) Date of filing: 03.07.2000
(51) Int. Cl.: F16H 25/24, B23Q 11/08, H01L 21/68, B65G 49/00

(54) **LINEAR ACTUATOR WITH DUSTPROOF MECHANISM**
LINEARANTRIEB MIT EINEM STAUBGESCHÜTZTEN MECHANISMUS
VERIN LINEAIRE A MECANISME ANTI-POUSSIERE

(43) Date of publication of application: 07.08.2002
(73) Proprietor: THK CO. LTD., Tokyo 141-8503 (JP)
(72) Inventor: YANAGISAWA, Ken, THK Mechanic Research Co. Ltd., Minamiazumi-gun, Nagano-ken 399-8205 (JP)
(74) Representative: Klunker . Schmitt-Nilson . Hirsch
(86) International application number: PCT/JP2000/004434
(87) International publication number: WO 2002/003451

(56) References cited:
- EP-A- 0 147 803
- DE-A1- 19 503 145
- DE-C1- 3 420 936
- JP-A- 1 289 685
- JP-A- 2 145 235
- US-A- 5 074 160
- US-A- 5 598 043
- US-A- 5 915 916

## Description

### Technical Field

The present invention relates to a linear actuator with a dustproof mechanism that is suited to use as a driving mechanism that is utilized in a clean room or the like, according to preamble of claim 1.

### Background Art

A variety of different constructions are used in conventional linear actuators. One example of a common linear actuator has a construction where the rotational movement of a motor is converted into reciprocal linear movement of a moving stage using a ball screw and a ball screw nut.

When a linear actuator is used in a clean room or the like, it is necessary to prevent dust, which is produced at sliding parts where the ball screw engages the ball screw nut and at sliding parts where the moving stage slides along guide rails that guide the moving stage, from escaping into the clean room.

In a linear actuator, openings are provided in an actuator housing along movement paths of connecting parts that connect the moving stage to the ball screw. Accordingly, it is necessary to reliably prevent dust from escaping from these openings.

### Disclosure of the Invention

It is an object of the present invention to provide a linear actuator with a dustproof mechanism that can reliably prevent dust from escaping from openings in an actuator housing.

The closest prior art document US 5915916 A shows an actuator including: a housing having a slit in the outer surface in such a manner that the slit is elongated in the direction of axis, and a conveying member which is supported by a linear guide device in such a manner that the conveying member is movable axially, and is moved back and forth by a moving device along the slit. The conveying member has a portion which is protruded from the housing through the slit, and engages with a movable loop made up of a seal belt which is laid over pulleys in such a manner that the seal belt is movable in the direction of axis while sealingly closing the slit. In the actuator, an auxiliary space communicated with outside is provided along a main space in the housing, and the main space and the auxiliary space are communicated through exhaust valves with each other which are provided at both ends of the main space and allow air to flow, in one direction, to the auxiliary space.

In order to achieve the above object, according to the present invention, there is provided a linear actuator including the features of claim 1.

Here, a construction that routes the dustproof belt away from the connecting part using a roller or a construction that routes the dustproof belt away from the connecting part using a sliding surface that may be curved can be used as the routing means.

When the moving stage is supported by two connecting parts that are provided on a left and a right side, two openings are provided on the left and right sides along the movement paths of these connecting parts. In this case, a through-hole for a central partition plate, which is arranged between the openings, may be formed in the moving stage.

In a typical linear actuator, the shaft member is arranged inside a compartment (actuator housing) that is formed by members that include the partition plate. In this case, by providing an intake port for sucking out air from an inside of the compartment, it becomes possible to reliably remove dust that is generated inside the compartment through suction.

In addition, by providing an air intake that is positioned on an outside of the compartment near the opening, dust that escapes through the opening can be reliably removed through suction.

### Brief Description Of The Drawings

FIGS. 1 are a plan view, a front view, and a cross-sectional view of a linear actuator according to the present invention.
FIG. 2 is an exploded perspective view showing the top, middle, and bottom plates that compose the moving stage of FIG. 1.
FIG. 3 is an explanatory view showing the dustproof mechanism of the linear actuator of FIG. 1.
FIGS. 4 are a plan view, a front view, and a cross-sectional view showing a modification of the linear actuator of FIG. 1.
FIG. 5 is a perspective view showing the middle plate that composes the moving stage of FIG. 4.

### Best Mode For Carrying Out The Present Invention

The following describes, with reference to the attached drawings, an example of a linear actuator with a dustproof mechanism according to the present invention.

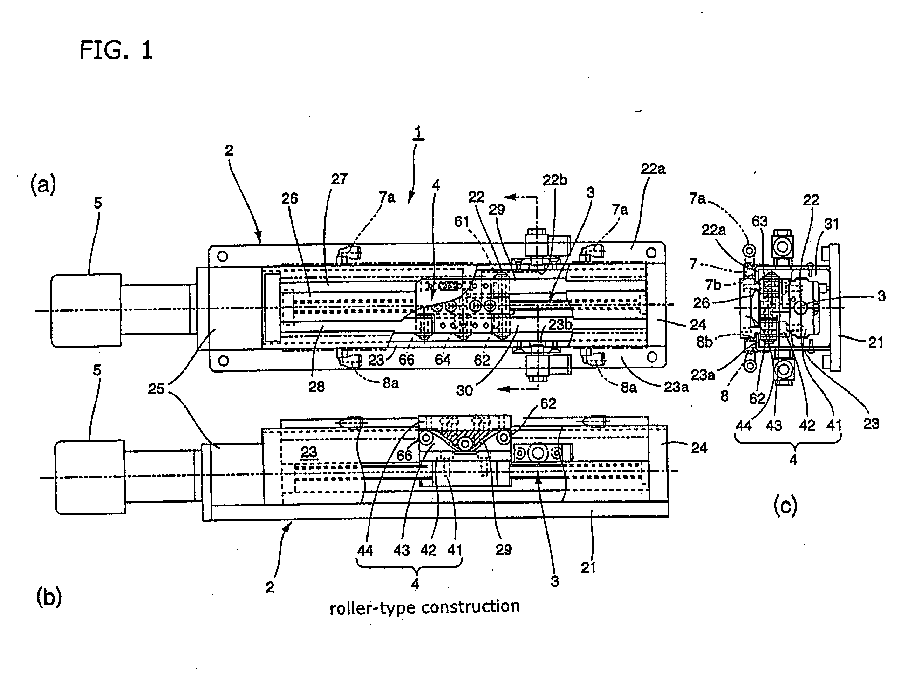

FIGS. 1 are a plan view, a front view, and a cross-sectional view of a linear actuator according to the present invention. As shown in these drawings, the linear actuator 1 includes a housing 2 in the form of a long, slim box, a ball screw 3 rotatably supported in the housing, a moving stage 4 that moves reciprocally in a straight line in concert with the rotation of the ball screw 3, and a driver motor 5 that rotates the ball screw 3.

The housing 2 is equipped with a horizontal base plate 21, a pair of vertical side plates (partition plates) 22 and 23 that are formed so as to extend vertically from an upper surface of the horizontal base plate 21 and horizontally parallel to the ball screw 3 on the left and right sides of the ball screw 3, and end blocks 24 and 25 that are attached to the front and back ends of the vertical side plates 22 and 23. One end of the ball screw 3 is supported by one of these end blocks (the end block 24) so as to be freely rotatable. A part of the ball screw 3 at the other end is supported by the other end block (the end block 25) so as to be freely rotatable, with the ball screw 3 passing through the end block 25 and being connected to the driver motor 5.

The upper ends of the left and right vertical side plates 22, 23 are bent inwards at right angles to form left and right horizontal upper side parts 22a and 23a. A central partition plate 26 is disposed between these left and right horizontal upper side parts 22a and 23a, with the front and back ends of this central partition plate 26 being fixed to the end blocks 24 and 25. As a result, a left-side opening 27 that extends in the axial direction of the ball screw 3, which is to say, the direction in which the moving stage 4 moves, is formed between the horizontal upper side part 22a and the central partition plate 26. In the same way, a right-side opening 28 is formed between the horizontal upper side part 23a and the central partition plate 26.

These openings 27 and 28 are covered by dustproof belts 29 and 30 that are wider than these openings. These dustproof belts 29 and 30 are suspended so as to span the gap between the end blocks 24 and 25 along the lower surfaces of the horizontal upper side parts 22a and 23a and the central partition plate 26.

With the horizontal substrate 21, the vertical side plates 22 and 23, the horizontal upper side parts 22a and 23a, the central partition plate 26, the end blocks 24 and 25, and the dustproof belts 29 and 30 that cover the openings 27 and 28, the housing 2 is in the form of a box-like compartment.

The moving stage 4 is equipped with a nut block 41 in which a ball nut screw that engages the ball screw 3 is formed, a bottom plate 42 that is attached to the upper surface of the nut block 41, a middle plate 43 that is attached to the upper surface of the bottom plate 42, and a top plate 44 that is attached to the upper surface of the middle plate 43. Both side surfaces of the nut block 41 are supported by linear guide rails 31, which are attached to an inside of the housing 2, so as to be freely slidable along the axial direction of the ball screw 3.

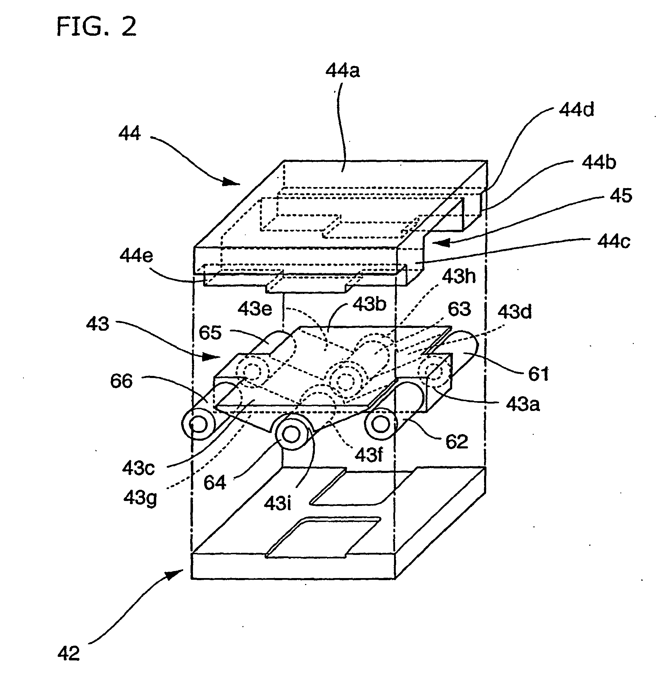

FIG. 2 is an exploded perspective view showing the form of the three plates 42 to 44 that are mounted on the nut block 41. Referring also to FIG. 2, the bottom plate 42 is a flat plate. The middle plate 43 that is attached on top of the bottom plate 42 is provided with a rib 43a that is rectangular in cross-section and extends in a front-back direction in the middle of the middle plate 43. Rollers 61 to 66 that extend horizontally and are supported so as to be freely rotatable are provided at left and right side surfaces on the rib 43a at the front end, the middle, and the back end of the rib 43a. Compared to the rollers 61, 62, 65, and 66 at both ends of the rib 43a, the rollers 63 and 64 in the middle are provided at somewhat lower positions.

Projecting parts 43b and 43c project horizontally from both sides of the rib 43a. The upper surfaces of the projecting parts 43b and 43c are flush with the upper surface of the rib 43a, but the lower surfaces of the projecting parts 43b and 43c are formed with sloped surfaces 43d, 43e and 43f, 43g that are sloped from the front and back ends of the projecting parts 43b and 43c towards the middle. Curved grooves 43h and 43i that are approximately semi-circular in shape are formed at the peaks where these sloped surfaces meet, with the rollers 63 and 64 being positioned in these curved grooves 43h and 43i.

The top plate 44 is provided with a plate-like main part 44a and projecting parts 44b and 44c that project downwards from the left and right sides of the lower surface of the main part 44a and extend in the front-back direction. These projecting parts 44b and 44c are fixed to the upper surface of the middle plate 43. As a result, the channel formed between the projecting parts 44b and 44c combines with the upper surface of the middle plate 43 to form a through-hole 45 through which the central partition plate 26 passes. The lower tips of the left and right side surfaces of the main part 44a are cut into L-shapes so that L-shaped grooves 44d and 44e extend in the front-back direction. These L-shaped grooves 44d and 44e face the left and right horizontal upper side parts 22a and 23a of the housing 2 with only narrow gaps being left between the L-shaped grooves 44d and 44e and the left and right horizontal upper side parts 22a and 23a.

In this way, the top plate 44 of the moving stage 4 is positioned on the outside of the housing 2, with the middle plate 43, the bottom plate 42, and the nut block 41 being provided on the inside of the housing 2. These inner and outer sections are connected by the pair of projecting parts 44b and 44c that are formed on the left and right sides of the lower surface of the top plate 44. The openings 27 and 28 on the left and right sides are formed along the movement paths of these projecting parts 44b and 44c that serve as the connecting parts.

In the present embodiment, the dustproof belts 29 and 30 are suspended across the device and are routed below the projecting parts 44b and 44c to stop the dustproof belts 29 and 30 and projecting parts (connecting parts) 44b and 44c from interfering with one another. In more detail, the left dustproof belt 29 is suspended so as to pass over the upper side of the front-side roller 61, along the sloped surface 43d, under the lower side of the center roller 63, along the sloped surface 43e, and then over the upper side of the rear side roller 65. In the same way, the right dustproof belt 30 is suspended so as to pass over the upper side of the front-side roller 62, along the sloped surface 43f, under the lower side of the center roller 63, along the sloped surface 43g, and then over the upper side of the rear side roller 66.

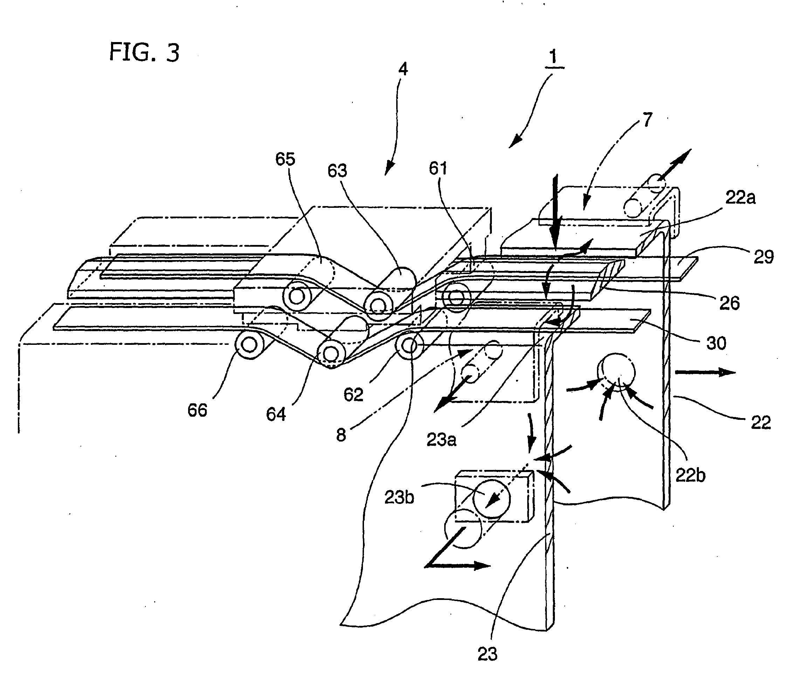

In the linear actuator 1 of the present embodiment that has the construction described above, as can be understood from FIG. 3, the openings 27 and 28 that are formed along the movement path of the moving stage 4 are covered by the dustproof belts 29 and 30. As a result, dust that is produced at the parts where the ball screw 3 and the ball screw nut of the nut block 41 slide against each other and dust that is produced at the parts where the nut block 41 slides on the linear guide rails 31 can be prevented from escaping via these openings 27 and 28 to the outside.

In the present embodiment, the dustproof belts 29 and 30 are disposed on the inside of the housing 2, with the dustproof belts 29 and 30 being routed downwards away from the projecting parts 44b and 44c of the moving stage 4 that move along these openings 27 and 28. When the internal pressure increases due to a pumping action that occurs in the housing due to the movement of the moving stage 4, the dustproof belts 29 and 30 are pressed against the horizontal upper side parts 22a and 23a and the central partition plate 26 from the inside of the housing 2. As a result, compared to the case where dustproof belts are provided on the outside of the housing, a more superior dustproofing effect can be obtained.

Also with the present embodiment, a through-hole 45 is provided in the moving stage 4, with the central partition plate 26 being disposed so as to pass through the through-hole 45. This enables the greatest possible reduction to be made in the widths of the openings 27 and 28. As a result, compared to the case where wide openings are provided in the housing 2, a reduction can be made in the amount of dust that escapes to the outside.

In addition to the construction described above, the linear actuator 1 of the present embodiment is also provided with an intake port for sucking out the air inside the housing. In more detail, as shown in FIG. 1 and FIG. 3, intake ports 22b and 23b are formed in the left and right side plates 22 and 23 so that the air inside the housing can be sucked out via these intake ports 22b and 23b.

As shown by the imaginary lines in the drawings, air ducts 7 and 8 that are rectangular in cross-section are also attached to the horizontal upper side parts 22a and 23a formed at the tops of the side plates 22 and 23. Narrow intake ports 7b and 8b that extend along the openings 27 and 28 are also provided between the air ducts 7 and 8 and the horizontal upper side parts 22a and 23a.

With the above construction, dust that is produced inside the housing is sucked out by an external dust collector (not shown in the drawings) via the intake ports 22b and 23b formed in the left and right side plates 22 and 23, thereby removing such dust from the inside of the housing.

Clean rooms and the like are normally provided with a downflow air stream. As a result, if suction is performed via the intake ports 7b and 8b that are provided near the openings 27 and 28, dust that has escaped via the openings 27 and 28 can be sucked out via the intake ports 7b and 8b together with the downflow air stream. As a result, dust can be reliably sucked out without the dust being blown into the periphery. In particular, in the present invention, the upper surface of the central partition plate 26 is tapered by having sloped surfaces on both the left and right sides, so that an air stream that comes from above can be efficiently led to the suction air holes 7b and 8b.

Furthermore, in the linear actuator 1 of the present embodiment, the provision of the central partition plate 26 results in the openings 27 and 28 being extremely narrow. As a result, it is possible to obtain the intended dustproofing effect even when the dustproof belts 29 and 30 are omitted from the construction and dustproofing is performed by only having air sucked out via the suction air holes described above.

### Alternative Embodiments

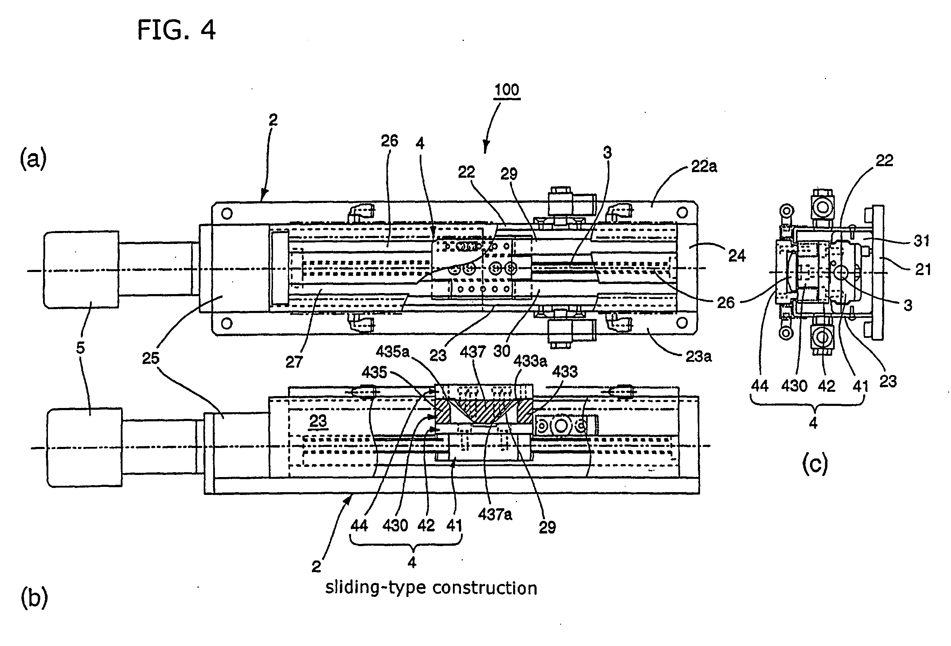

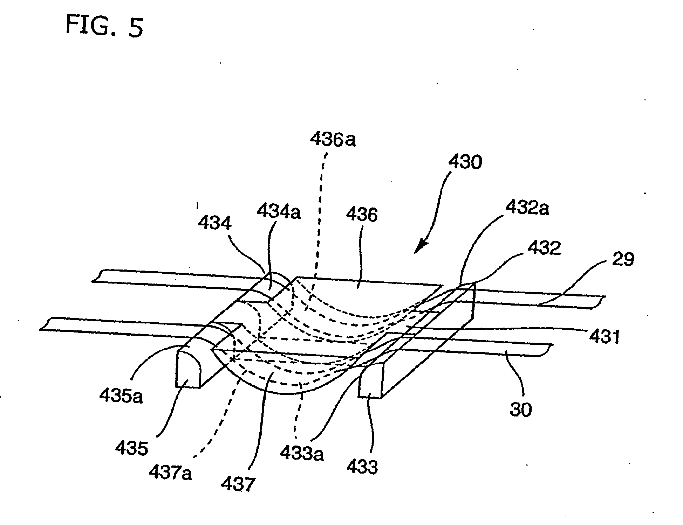

FIGS. 4(a) to 4(c) are respectively a plan view, a front view, and a cross-sectional view of a modified example of the linear actuator described above, while FIG. 5 is a perspective view drawing showing the middle plate of the moving stage. This linear actuator 100 has fundamentally the same construction as the linear actuator 1 described above, so that the corresponding parts have been given the same reference numerals and are not explained further.

The linear actuator 100 of this modification uses curved sliding surfaces, in place of the rollers of the linear actuator 1, in order to route the pair of dustproof belts 29 and 30 so that the dustproof belts 29 and 30 do not interfere with the projecting parts 44b and 44c of the moving stage 4. These curved sliding surfaces project downwards.

In more detail, in place of a middle plate 43 that is provided with rollers (see FIG. 2), the linear actuator 100 includes a middle plate 430 as the middle plate in the moving stage 4 construction. This middle plate 430 has a rib 431 that is rectangular in cross-section and extends across the middle of the middle plate 430 in a front-back direction. Front side-extending parts 432 and 433 extend horizontally from the left and right sides from the side surfaces at the front of the rib 431, with middle side-extending parts 436 and 437 and back side-extending parts 434 and 435 extending in the same way from the side surfaces at the middle and the back of the rib 431, respectively. The lower surfaces of the middle side-extending parts 436 and 437 form curved sliding surfaces 436a and 437a that project downwards. Projecting curved sliding surfaces 432a and 433a, which face the curved sliding surfaces 436a and 437a with a predetermined gap in between, are formed on the front side-extending parts 432 and 433. In the same way, projecting curved sliding surfaces 434a and 435a, which face the curved sliding surfaces 436a and 437a with a predetermined gap in between, are formed on the back side-extending parts 434 and 435.

The left-side dustproof belt 29 is suspended on the sliding surfaces 432a, 436a, and 434a on the left side. In the same way, the right-side dustproof belt 30 is suspended on the sliding surfaces 433a, 437a, and 435a on the right side. Each of these sliding surfaces slides along the dustproof belts 29 and 30 when the moving stage 4 moves.

### Industrial Applicability

As described above, with the linear actuator of the present invention, openings in a housing (compartment) that are formed along the movement path of a moving stage are covered by wide dustproof belts that are disposed on an inside of the housing. With the present arrangement, the dustproof belts are routed within the housing so as to stop the dustproof belts interfering with the position of the moving stage that moves along the openings. Consequently, according to the present invention, in cases such as when the internal pressure of the housing has increased due to movement of the moving stage, a more superior dustproofing effect can be obtained compared to when a construction where the dustproof belts are provided on the outside of the housings is used.

The present invention is also constructed so as to include intake ports for allowing air to be sucked out from inside the housing and intake ports that are located near openings where the housing is open to the outside. By performing a suction operation that sucks air through these intake ports, dust that is produced inside the housing can be sucked out and collected by a dust collector or the like, thereby reliably preventing dust from escaping from the linear actuator.

## Claims

1. A linear actuator (1) including a shaft member (3) and a moving stage (4) that mechanically engages the shaft member (3) and is capable of reciprocally moving along the shaft member (3), **characterized by** comprising:
a pair of vertical side plates (22, 23) disposed between the shaft member (3) and the moving stage,
the vertical side plates (22, 23) being formed so as to extend vertically from an upper surface of a horizontal base plate (21) and horizontally parallel to the shaft member (3) on left and right sides of the shaft member (3)
the vertical side plates (22, 23) having upper ends that are bent inwards at right angles to form left and right horizontal upper side parts (22a, 23a), a central partition plate (26) being disposed between the left and right horizontal upper side parts (22a, 23a), and
the vertical side plates (22, 23) and the central partition plate (26) having front and back ends thereof attached to a pair of end blocks (24, 25) that support both ends of the shaft member (3) to be freely rotatable;
a left-side opening (27) that is formed between the horizontal upper side part (22a) and the central partition plate (26) and extends in an axial direction of the shaft member (3) along a movement path of a connecting part of the moving stage (4) that connects the moving stage (4) to the shaft member (3), and
a right-side opening (28) that is formed between the horizontal upper side part (23a) and the central partition plate (26) and extends in the axial direction of the shaft member (3) along a movement path of a connecting part of the moving stage (4) that connects the moving stage (4) to the shaft member (3), and
a dustproof belt (29) that is disposed along each of the openings (27, 28) on a shaft member-side of the central partition plate (26) to cover the opening (27, 28) and is suspended so as to span a gap between the end blocks (24, 25); and
belt routing means (43, 61, 62, 63, 64, 65, 66) that are attached to the moving stage (4) and route-the dustproof belt (29) away from the connecting part of the moving stage (4) to the shaft member-side,
the belt routing means (43, 61, 62, 63, 64, 65, 66) includes roller means (61, 62, 63, 64, 65, 66) that presses the dustproof belt (29) onto the shaft member-side or a sliding surface (43d, 43e, 43f, 43g) that presses the dustproof belt (29) onto the shaft member-side.

2. A linear actuator (1) according to Claim 1, wherein
the moving stage (4) includes a pair of left and right connecting parts (44b, 44c) as the connecting part,
the left-side opening (27) and right-side opening (28) correspond to the left and right connecting parts (44b, 44c), and
the moving stage (4) includes a through-hole (45) through which the central partition plate (26) passes.

3. A linear actuator (1) according to Claim 1, wherein the shaft member (3) is disposed in a compartment (2) formed by members that include the vertical side plates (22, 23), and the linear actuator (1) further comprises an intake port (22b, 23b) for sucking air out of an inside of the compartment (2).

4. A linear actuator (1) according to Claim 1, wherein the shaft member (3) is disposed in a compartment (2) formed by members that include the vertical side plates (22, 23), and the linear actuator further comprises an intake port (7b, 8b) that is disposed on an outside of the compartment near the opening.

5. A linear actuator (1) according to any of Claims 1 to 4, wherein the shaft member (3) is a ball screw, and a ball screw nut that engages the ball screw is formed on the moving stage.

## Patentansprüche

1. Linearaktuator (1) mit einem Spindelelement (3) und einer sich bewegenden Bühne (4), die mechanisch in das Spindelelement (3) eingreift und in der Lage ist, sich entlang des Spindelelements (3) hin und her zu bewegen, **dadurch gekennzeichnet, dass** er aufweist:
ein Paar vertikaler Seitenplatten (22, 23), die zwischen dem Spindelelement (3) und der sich bewegenden Bühne angeordnet sind,
wobei die vertikalen Seitenplatten (22, 23) so ausgebildet sind, dass sie sich vertikal von einer oberen Fläche einer horizontalen Grundplatte (21) und auf der linken und rechten Seite des Spindelelements (3) horizontal parallel zu dem Spindelelement (3) erstrecken,
wobei die vertikalen Seitenplatten (22, 23) obere Enden haben, die im rechten Winkel nach innen gebogen sind, um jeweils einen linken und einen rechten horizontalen oberen Seitenbereich (22a, 23a) zu bilden, wobei eine zentrale Trennplatte (26) zwischen dem linken und dem rechten horizontalen oberen Seitenbereich (22a, 23a) angeordnet ist, und
wobei die vertikalen Seitenplatten (22, 23) und die zentrale Trennplatte (26) ein vorderes und ein hinteres Ende haben, die an einem Paar von Endblöcken (24, 25) befestigt sind, die beide Enden des Spindelelements (3) frei rotierbar abstützen;
eine linksseitige Öffnung (27), die zwischen dem horizontalen oberen Seitenbereich (22a) und der zentralen Trennplatte (26) ausgebildet ist und die sich in einer axialen Richtung des Spindelelements (3) entlang eines Bewegungspfades eines Verbindungsbereichs der sich bewegenden Bühne (4) erstreckt, der die sich bewegende Bühne (4) mit dem Spindelelement (3) verbindet, und
eine rechtsseitige Öffnung (28), die zwischen dem horizontalen oberen Seitenbereich (23a) und der zentralen Trennplatte (26) ausgebildet ist und die sich in der axialen Richtung des Spindelelements (3) entlang eines Bewegungspfades eines Verbindungsbereichs der sich bewegenden Bühne (4) erstreckt, der die sich bewegende Bühne (4) mit dem Spindelelement (3) verbindet, und
einem staubdichten Riemen (29), der entlang jeder der Öffnungen (27, 28) auf der der Spindel zugewandten Seite der zentralen Trennplatte (26) angeordnet ist, um die Öffnungen (27, 28) abzudecken, und der so aufgehängt ist, dass er eine Lücke zwischen den Endblöcken (24, 25) überspannt; und
Riemenführungsmittel (43, 61, 62, 63, 64, 65, 66), die an der sich bewegenden Bühne (4) befestigt sind und die den staubdichten Riemen (29) vom Verbindungsbereich der sich bewegenden Bühne weg auf die dem Spindelelement zugewandte Seite führen, wobei das Riemenführungsmittel (43, 61, 62, 63, 64, 65, 66) ein Rollmittel (61, 62, 63, 64, 65, 66), das den staubdichten Riemen (29) auf die dem Spindelelement zugewandte Seite drückt, oder eine Gleitfläche (43d, 43e, 43f, 43g), die den staubdichten Riemen (29) auf die dem Spindelelement zugewandte Seite drückt, aufweist.

2. Linearaktuator (1) nach Anspruch 1, wobei
die sich bewegende Bühne (4) ein Paar aus einem linken und einem rechten Verbindungsbereich (44b, 44c) als Verbindungsbereich aufweist,
die linksseitige Öffnung (27) und die rechtsseitige Öffnung (28) mit dem linken und dem rechten Verbindungsbereich (44b, 44c) korrespondieren, und
die sich bewegende Bühne (4) eine Durchgangsöffnung (45) aufweist, durch welche sich die zentrale Trennplatte (26) erstreckt.

3. Linearaktuator (1) nach Anspruch 1, wobei das Spindelelement (3) in einem Fach (2) angeordnet ist, das aus Elementen geformt ist, welche die vertikalen Seitenplatten (22, 23) einschließen, und wobei der Linearaktuator (1) zusätzlich eine Einlassöffnung (22b, 23b) aufweist, um Luft aus dem Inneren des Fachs (2) zu saugen.

4. Linearaktuator (1) nach Anspruch 1, wobei das Spindelelement (3) in einem Fach (2) angeordnet ist, das aus Elementen geformt ist, welche die vertikalen Seitenplatten (22, 23) einschließen, und wobei der Linearaktuator zusätzlich eine Einlassöffnung (7b, 8b) aufweist, die in der Nähe der Öffnung auf einer Außenseite des Faches angeordnet ist.

5. Linearaktuator (1) nach einem der Ansprüche 1 bis 4, wobei das Spindelelement (3) eine Kugelgewindespindel ist und eine Kugelgewindespindelmutter, die in die Kugelgewindespindel eingreift, an der sich bewegenden Bühne ausgebildet ist.

## Revendications

1. Vérin linéaire (1) englobant un membre (3) faisant office d'arbre et un étage mobile (4) qui entre en contact mécanique avec le membre (3) faisant office d'arbre et qui est capable d'effectuer un mouvement alternatif le long du membre (3) faisant office d'arbre, **caractérisé par le fait qu'**il comprend :
une paire de plaques latérales verticales (22, 23) qui sont disposées entre le membre (3) faisant office d'arbre et l'étage mobile ;
les plaques latérales verticales (22, 23) étant réalisées de façon à s'étendre à la verticale à partir d'une surface supérieure d'une plaque de base horizontale (21) et en direction horizontale parallèlement au membre (3) faisant office d'arbre du côté droit et du côté gauche du membre (3) faisant office d'arbre ;
les plaques latérales verticales (22, 23) possédant des extrémités supérieures qui sont coudées vers l'intérieur en formant des angles droits pour former des parties latérales supérieures horizontales gauche et droite (22a, 23a), une plaque de séparation centrale (26) étant disposée entre les parties latérales supérieures horizontales gauche et droite (22a, 23a) ; et
les extrémités avant et arrière des plaques latérales verticales (22, 23) et de la plaque de séparation centrale (26) étant fixées à une paire de blocs terminaux (24, 25) qui supportent les deux extrémités du membre (3) faisant office d'arbre pour permettre à ce dernier de tourner librement ;
une ouverture côté gauche (27) qui est pratiquée entre la partie latérale supérieure horizontale (22a) et la plaque de séparation centrale (26) et qui s'étend dans la direction axiale du membre (3) faisant office d'arbre le long d'une trajectoire de mouvement d'une pièce de raccordement de l'étage mobile (4) qui raccorde l'étage mobile (4) au membre (3) faisant office d'arbre ; et
une ouverture côté droit (28) qui est pratiquée entre la partie latérale supérieure horizontale (23a) et la plaque de séparation centrale (26) et qui s'étend dans la direction axiale du membre (3) faisant office d'arbre le long d'une trajectoire de mouvement d'une pièce de raccordement de l'étage mobile (4) qui raccorde l'étage mobile (4) au membre (3) faisant office d'arbre ; et
une courroie (29) étanche aux poussières qui est disposée le long de chacune des ouvertures (27, 28) du côté de la plaque de séparation centrale (26) concerné par le membre faisant office d'arbre, pour recouvrir l'ouverture (27, 28) et qui est suspendue de façon à surplomber l'espace libre ménagé entre les blocs terminaux (24, 25) ; et
des moyens d'acheminement de courroie (43, 61, 62, 63, 64, 65, 66) qui sont fixés à l'étage mobile (4) et qui acheminent la courroie (29) étanche aux poussières à l'écart de la pièce de raccordement de l'étage mobile (4) en direction du côté concerné par le membre faisant office d'arbre ;
les moyens d'acheminement de courroie (43, 61, 62, 63, 64, 65, 66) englobant des moyens en forme de rouleaux (61, 62, 63, 64, 65, 66) qui compriment la courroie (29) étanche aux poussières sur le côté concerné par le membre faisant office d'arbre ou une surface de glissement (43d, 43e, 43f, 43g) qui comprime la courroie (29) étanche aux poussières sur le côté concerné par le membre faisant office d'arbre.

2. Vérin linéaire (1) selon la revendication 1, dans lequel
l'étage mobile (4) englobe une paire de pièces de raccordement gauche et droite (44b, 44c) à titre de pièce de raccordement ;
l'ouverture côté gauche (27) et l'ouverture côté droit (28) correspondent aux pièces de raccordement gauche et droite (44b, 44c) ; et
l'étage mobile (4) englobe un trou de passage (45) que traverse la plaque de séparation centrale (26).

3. Vérin linéaire (1) selon la revendication 1, dans lequel le membre (3) faisant office d'arbre est disposé dans un compartiment (2) formé par des membres qui englobent les plaques latérales verticales (22, 23), le vérin linéaire (1) comprenant en outre un orifice d'entrée (22b, 23b) pour aspirer l'air vers l'extérieur depuis l'intérieur du compartiment (2).

4. Vérin linéaire (1) selon la revendication 1, dans lequel le membre (3) faisant office d'arbre est disposé dans un compartiment (2) formé par des membres qui englobent les plaques latérales verticales (22, 23), le vérin linéaire (1) comprenant en outre un orifice d'entrée (7b, 8b) qui est disposé à l'extérieur du compartiment, à proximité de l'ouverture.

5. Vérin linéaire (1) selon l'une quelconque des revendications 1 à 4, dans lequel le membre (3) faisant office d'arbre représente une vis sphérique, un écrou pour vis sphérique venant s'engrener avec la vis sphérique étant réalisé sur l'étage mobile.
